# EUROPÄISCHE PATENTSCHRIFT

(11) **EP 3 209 979 B1**
(45) Veröffentlichungstag und Bekanntmachung des Hinweises auf die Patenterteilung: **06.12.2023**
(21) Anmeldenummer: 14790046.8
(22) Anmeldetag: 22.10.2014
(51) Int. Cl.: H01Q 3/08, H01Q 21/06, G01F 23/284, G01S 13/88, H01Q 1/22

(54) **TOPOLOGIEBESTIMMUNG EINER FÜLLGUTOBERFLÄCHE MIT GLEICHMÄSSIGER ZEILENABTASTUNG**
TOPOLOGY DETERMINATION OF A FILLING MATERIAL SURFACE WITH UNIFORM LINE SCANNING
DÉTERMINATION DE LA TOPOLOGIE D'UNE SURFACE DE PRODUIT DE REMPLISSAGE AVEC BALAYAGE DE LIGNE RÉGULIER

(43) Veröffentlichungstag der Anmeldung: 30.08.2017
(73) Patentinhaber: VEGA Grieshaber KG, 77709 Wolfach (DE)
(72) Erfinder: WÄLDE, Steffen, 78078 Niedereschach (DE); WELLE, Roland, 77756 Hausach (DE); GRIESSBAUM, Karl, 77796 Mühlenbach (DE); FEHRENBACH, Josef, 77716 Haslach (DE)
(74) Vertreter: Maiwald GmbH
(86) Internationale Anmeldenummer: PCT/EP2014/072685
(87) Internationale Veröffentlichungsnummer: WO 2016/062341

(56) Entgegenhaltungen:
- EP-A1- 2 128 576
- EP-A2- 1 701 142
- WO-A2-2013/036727
- DE-A1-102004 041 857
- DE-A1-102007 012 938
- US-A1- 2004 108 951
- US-A1- 2010 019 952

## Beschreibung

### Gebiet der Erfindung

Die Erfindung betrifft Füllstandmessgeräte und die Bestimmung von Füllständen und Füllgutoberflächentopologien. Auch betrifft die Erfindung Messgeräte zur Objektüberwachung oder Massestromerfassung. Darüber hinaus betrifft die Erfindung die Verwendung eines Füllstandmessgeräts zur Bestimmung einer Viskosität einer bewegten Flüssigkeit und zur Bestimmung der Masse oder des Volumens eines Mediums.

### Hintergrund der Erfindung

Die Erfassung der Topologie einer Füllgutoberfläche kann insbesondere bei der Vermessung von Schüttgütern und den dabei auftretenden Schüttkegeln oder Abzugstrichtern innerhalb oder außerhalb geschlossener Behälter vorteilhaft sein. Auch ist es möglich, die Topologie bewegter Flüssigkeiten zu erfassen. Diese verändert sich beispielsweise beim Einsatz von Rührern und den damit zusammenhängenden Strömungen an der Flüssigkeitsoberfläche, wodurch sog. Tromben entstehen können. Die Topologie kann Rückschlüsse auf weitere Größen, die von Interesse sind, wie beispielsweise die Viskosität des Füllmediums oder die Durchmischung des Füllmediums, erlauben. Hierbei kann die Geschwindigkeit des Rührwerks berücksichtigt werden.

Verfahren zum berührungslosen Abtasten einer Oberfläche können beispielsweise auf dem Prinzip beruhen, dass ein in Richtung der Oberfläche ausgesendetes Signal an dieser reflektiert wird und eine Laufzeit oder Signalstärke des reflektierten Signals ausgewertet wird. Um die Topologie der Füllgutoberfläche mit ausreichender Genauigkeit zu erfassen, kann es notwendig sein, eine Vielzahl von Messungen in Richtung bestimmter Bereiche der Füllgutoberfläche auszuführen, was die Komplexität sowie die Kosten für derartige Messvorrichtungen oder Messverfahren erhöhen kann.

Zur Abtastung der Füllgutoberfläche können schwenkbare Messvorrichtungen oder elektronische Strahlsteuerungen verwendet werden, welche ein Abtasten der Füllgutoberfläche erlauben.

DE 10 2004 041 857 A1 beschreibt ein Verfahren und eine Vorrichtung zum Ausrichten eines Messgeräts mit entweder einer mechanischen Ausrichtungsvorrichtung oder einer elektronischen Ausrichtungsvorrichtung.

EP 2 128 576 A1 beschreibt die Auswertung der Echoform in der Füllstandmessung, um Schüttkegel oder Abzugstrichter zu identifizieren.

WO 2013/036727 A2 beschreibt ein Luftraumüberwachungsradarsystem mit einem Azimut-Scanner und einem Elevations-Scanner.

US 2004/108951 A1 beschreibt ein Füllstandradargerät, dessen Antenne vor Beginn der Messung ausgeklappt werden kann.

### Zusammenfassung der Erfindung

Eine Aufgabe der vorliegenden Erfindung kann darin gesehen werden, die Bestimmung der Topologie einer Füllgutoberfläche möglichst effektiv zu gestalten.

Diese Aufgabe wird durch die Gegenstände der unabhängigen Ansprüche gelöst. Weitere Ausführungsformen der Erfindung ergeben sich aus den abhängigen Ansprüchen und der folgenden Beschreibung.

Ein erster Aspekt der Erfindung betrifft ein Füllstandmessgerät zum Bestimmen einer Topologie einer Füllgutoberfläche. Das Füllstandmessgerät weist eine Antenneneinrichtung und eine drehbare Lagerung zum Drehen der Antenneneinrichtung um eine (erste) Achse, die senkrecht zu einer Hauptabstrahlrichtung der Antenne liegt. Die Antenneneinrichtung weist ein Array an Strahlerelementen, beispielsweise in Form von Patches, auf, das zum Senden und/oder Empfangen von elektromagnetischen Messsignalen in Richtung der Füllgutoberfläche ausgeführt ist. Das Array ist ein eindimensionales Array, das sich in einer Längsrichtung erstreckt. Die (Dreh) Achse, um welche die drehbare Lagerung die Antenneneinrichtung drehen kann, ist parallel zu dem Array angeordnet und liegt in der Ebene des Arrays. Die Achse ist jedenfalls nicht vertikal ausgerichtet.

Das Füllstandmessgerät ist so ausgeführt, dass mehrere Abstrahl- und/oder Empfangswinkel der Antenneneinrichtung relativ zur Füllgutoberfläche durch Drehung der Antenneneinrichtung um die nicht-vertikale Achse in Kombination mit der elektronischen Strahlsteuerung sowohl elektronisch als auch mechanisch einstellbar sind, um die Füllgutoberfläche zeilenweise abzutasten und die Topologie der Füllgutoberfläche zu ermitteln.

Somit kann die Abstrahlrichtung der Sendesignale durch eine mechanische Bewegung der Antennenanordnung in Kombination mit einer elektronischen Veränderung der Antennenabstrahlrichtung, beispielsweise durch digitale Strahlumformung (Digital Beam Forming), verändert werden.

Die drehbare Lagerung und die elektronische Einstellung von Abstrahl- und/oder Empfangswinkel der Antenneneinrichtung sind dabei so aufeinander abgestimmt, dass die Antenneneinrichtung die Füllgutoberfläche, oder im Falle eines Schüttguts die Schüttgutoberfläche, möglichst gleichmäßig, erfindungsgemäß zeilenweise, abtastet.

Auf diese Weise kann eine Überabtastung bestimmter Bereiche auf der Schüttgutoberfläche verringert oder gänzlich vermieden werden, was eine schnellere Erfassung der Topologie zur Folge hat.

Durch die Drehung der Antenneneinrichtung um die Achse, die nicht senkrecht auf die Ebene der Antenneneinrichtung steht, in welcher die Strahlerelemente angeordnet sind, und die gleichzeitig nicht senkrecht zur Füllgutoberfläche kann in Kombination mit der elektronischen Strahlsteuerung eine zeilenweise Abtastung der Schüttgutoberfläche erfolgen, ohne dass sich die Abtastzeilen kreuzen, da sie parallel zueinander stehen.

Es sei in diesem Kontext darauf hingewiesen, dass die elektronische Einstellung des Abstrahl- und/oder Empfangswinkels der Antenneneinrichtung in analoger Form, beispielsweise durch Verwendung von Antennenarrays in Verbindung mit geeigneten Phasenschieberschaltungen oder analogen Schaltern, als auch in digitaler Form, beispielsweise durch Antennenarrays in Verbindung mit numerischen Berechnungen an den digitalisierten Empfangskurven oder Echosignalen, implementiert werden kann.

Gemäß der Erfindung ist das Array ein eindimensionales Array, das sich in einer Längsrichtung erstreckt, wobei die Achse parallel zu der Längsrichtung des Arrays angeordnet ist.

Gemäß einer weiteren Ausführungsform der Erfindung erfolgt das elektronische Einstellen der Abstrahl- und/oder Empfangswinkel unter Verwendung digitaler Strahlumformungsverfahren.

Gemäß einer weiteren Ausführungsform der Erfindung weist das Füllstandmessgerät eine weitere drehbare Lagerung zum Drehen der Antenneneinrichtung um eine (zweite) Achse auf, die nicht parallel zu der ersten Achse angeordnet ist. Beispielsweise handelt es sich bei der weiteren Achse um eine vertikale Achse. Somit weist die Antenneneinrichtung zwei Rotationsfreiheitsgrade auf.

Gemäß einer weiteren Ausführungsform der Erfindung ist die Antenneneinrichtung in ihrer Längserstreckung schräg relativ zu einer horizontalen Richtung angeordnet, wenn das Füllstandmessgerät in den Behälter eingebaut ist bzw. derart installiert ist, um die Topologie der Füllgutoberfläche (bzw. der Schüttgutoberfläche) zu erfassen.

Die Längserstreckung verläuft hierbei in der Ebene, in der die Strahlerelemente angeordnet sind.

In anderen Worten ist der Winkel zwischen der Längsrichtung der Antenneneinrichtung und der horizontalen Richtung ungleich null Grad.

Gemäß einer weiteren Ausführungsform der Erfindung weist das Füllstandmessgerät eine Energieversorgungs- und Kommunikationsschnittstelle zum Anschluss des Füllstandmessgeräts an eine Leitung, insbesondere an eine Zweidraht- oder Vierdrahtleitung auf, über welche das Füllstandmessgerät mit der für den Messbetrieb notwendigen Energie versorgt werden kann und über welche Messdaten an eine entfernte Steuereinheit übertragen werden können.

Die Antenneneinrichtung kann beispielsweise eine Patchantenne sein, die eine Vielzahl von einzelnen, kleinen, miteinander kombinierten Einzelstrahlern (sog. Patches) kombiniert. Diese Patches können beispielsweise auf einem gemeinsamen Träger oder als Metallschicht an der Leiterplatte angeordnet sein.

Der Abstrahl- und/oder Empfangswinkel der Antenneneinrichtung kann als derjenige Winkel verstanden werden, der sich aus der derzeitigen Hauptabstrahlrichtung der Antenneneinrichtung relativ zur Längserstreckung der Antenneneinrichtung ergibt. Eine Änderung des Abstrahl- und/oder Empfangswinkels kann also ohne mechanische Bewegung oder Veränderung einer Position der Antenneneinrichtung im Raum erreicht werden. Eine elektronische Einstellung des Abstrahlwinkels kann beispielsweise durch Überlagerungseffekte (konstruktive und destruktive Interferenzen) in Kombination mit einer Phasenverschiebung erreicht werden. Für den Empfangsfall kann die Veränderung der Empfangsrichtung durch eine Phasenverschiebung der einzelnen Empfangskanäle einer Arrayantenne zueinander durch bekannte Algorithmen der digitalen Strahlumformung erfolgen.

Gemäß einem weiteren Aspekt der Erfindung ist die Verwendung eines oben und im Folgenden beschriebenen Füllstandmessgeräts zur Bestimmung einer Viskosität einer bewegten Flüssigkeit angegeben.

Gemäß einem weiteren Aspekt der Erfindung ist die Verwendung eines oben und im Folgenden beschriebenen Füllstandmessgeräts zur Bestimmung der Masse oder des Volumens eines Mediums angegeben.

Im Folgenden werden Ausführungsbeispiele der Erfindung mit Bezug auf die beiliegenden Figuren detailliert beschrieben.

### Kurze Beschreibung der Figuren

Fig. 1A zeigt ein in einem Behälter eingebautes Füllstandmessgerät gemäß einem Ausführungsbeispiel der Erfindung.
Fig. 1B zeigt ein Scanmuster, welches durch die Rotation der Antenneneinrichtung um eine vertikale (zweite) Achse und elektronische Strahlsteuerung erreicht werden kann.
Fig. 2 zeigt ein Beispiel einer eindimensionalen Arrayantenne.
Fig. 3A zeigt ein Füllstandmessgerät in einem Behälter gemäß einem weiteren Ausführungsbeispiel der Erfindung.
Fig. 3B zeigt ein Scanmuster, welches durch Drehung der Antenne um eine Achse, die parallel zu dem Array der Antenne angeordnet ist, erreicht werden kann.
Fig. 4A zeigt eine eindimensionale Arrayantenne gemäß einem Ausführungsbeispiel der Erfindung mit einer Parabolrinne als Hauptreflektor und einem hyperbolisch geformten Gegenreflektor.
Fig. 4B zeigt eine Seitenansicht der Antenne der Fig. 4A.
Fig. 5A zeigt eine Antenneneinrichtung gemäß einem Ausführungsbeispiel der Erfindung.
Fig. 5B zeigt die Antenneneinrichtung der Fig. 5A nach einer Drehung der Antenneneinrichtung um die (erste) Achse.
Fig. 6 zeigt ein Flussdiagramm eines Verfahrens gemäß einem Ausführungsbeispiel.

### Detaillierte Beschreibung von Ausführungsbeispielen

Die Darstellungen in den Figuren sind schematisch und nicht maßstäblich. Werden in verschiedenen Figuren die gleichen Bezugszeichen verwendet, so bezeichnen diese gleiche oder entsprechende Elemente. Gleiche oder entsprechende Elemente können aber auch durch unterschiedliche Bezugszeichen bezeichnet sein.

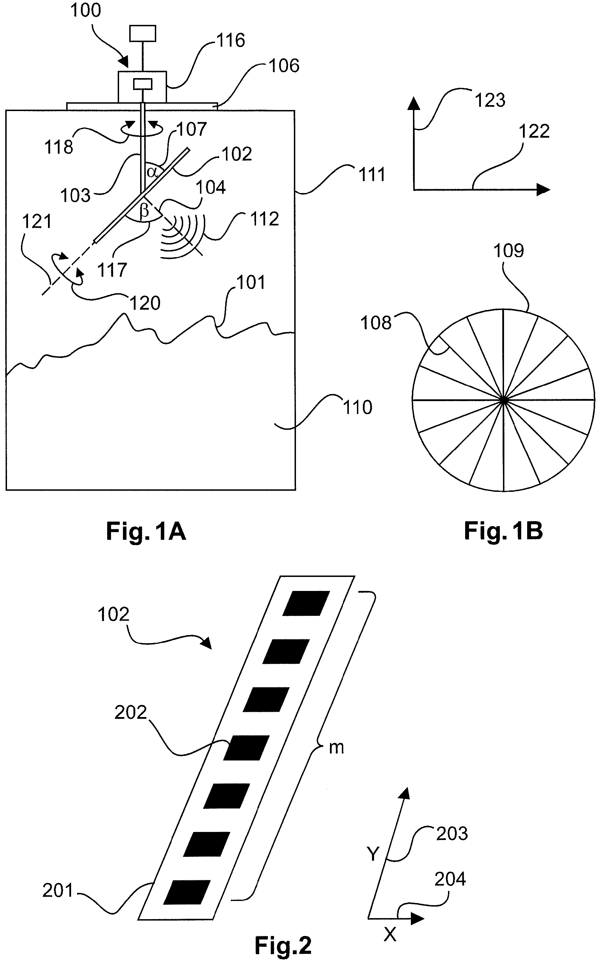

Fig. 1 zeigt ein Füllstandmessgerät 100 zum Bestimmen einer Topologie einer Oberfläche 101 eines Füll- oder Schüttgutes 110. Das Füllstandmessgerät 100 ist am Behälter 111 angebracht und weist eine Antenneneinrichtung 102 auf, welche sich um die Achse 121 mittels einer drehbaren Lagerung drehen lässt. Diese Achse 121 ist parallel zur Längserstreckung der Antennenanordnung 102 angeordnet. Die Drehrichtung um die Achse 121 ist durch den Pfeil 120 symbolisiert.

Die Antenneneinrichtung 102 ist beispielsweise als Arrayantenne ausgeführt (ein- oder zweidimensional) und weist eine Hauptabstrahlrichtung 104 auf, die typischerweise senkrecht zur Ebene des Arrays steht. Durch eine elektronische Strahlsteuerung kann die Abstrahlrichtung 104 und insbesondere der Winkel β 117, der zwischen der Abstrahlrichtung 104 und der Drehachse 121 gebildet ist, eingestellt werden.

Die Antenneneinrichtung sendet ein elektromagnetisches Sendesignal 112 aus, welches von der Füllgutoberfläche 101 reflektiert und zur Antenneneinrichtung 102 zurückgestrahlt wird. Die Antenneneinrichtung nimmt das zurückgestrahlte Signal auf und die daran angeschlossene Hochfrequenz- und Elektronikeinheit bildet daraus eine Echokurve.

Das Füllstandmessgerät weist eine weitere drehbare Lagerung 103 auf, über welche die Antenneneinrichtung 102 mit dem Grundkörper 116 des Füllstandmessgeräts verbunden ist, und durch welche sich die Antenneneinrichtung 102 um die vertikale Achse drehen lässt, wie dies durch den Pfeil 118 symbolisiert ist.

Die Richtung der vertikalen Achse ist durch Bezugszeichen 123 bezeichnet und die horizontale Richtung durch Bezugszeichen 122.

Das Füllstandmessgerät ermöglicht es, ein schnelles und vergleichsweise günstiges Verfahren zur Erfassung einer Topologie der Füllgutoberfläche 101 durchzuführen, da nicht nur eine rein mechanische oder eine rein elektronische Veränderung der Hauptabstrahlrichtung 104 des Füllstandmessgeräts 100 erfolgt, sondern vielmehr eine Kombination aus mechanischer und elektronischer Richtungsänderung. Beispielsweise wird einen elektronischer Zeilenscanner (Antenneneinrichtung 102), der mechanisch um die vertikale (zweite) Drehachse und auch um die (erste) Drehachse 121 geschwenkt werden kann, verwendet.

Der Zeilenscanner 102 besteht gemäß Fig. 2 aus einer Sende- und Empfangseinheit 201, die aus m (m = 2, 3, 4, ...) sendenden und/oder empfangenden Antennenelementen (auch Strahlerelemente oder Patches genannt) 202 bestehen kann, die nebeneinander zu einer Zeile angeordnet sind. Die y-Achse 203 verläuft hierbei entlang der Längserstreckung der Antenneneinrichtung, die x-Achse 204 senkrecht dazu innerhalb der Ebene der Antenneneinrichtung.

Durch die elektronische Verarbeitung der einzelnen Signale der Sende- und Empfangseinheiten kann die Antennencharakteristik dieser Zeile digital so beeinflusst werden, dass die Hauptempfangsrichtung in einer Dimension geschwenkt werden kann. Eine Zeile hat einen schmalen Antennenöffnungswinkel in y-Richtung von beispielsweise 3 Grad. Entsprechende Verfahren zur Strahlschwenkung sind dem Fachmann bekannt und werden unter den Schlagworten Antennenarray und digitale Strahlumformung in der Fachliteratur ausführlich beschrieben.

Die eindimensionale Antenne 201 kann durch Anwendung der nachgelagerten Algorithmen zur digitalen Strahlformung eine sehr gute Fokussierung der resultierenden Antennencharakteristik in Richtung der Y-Ausdehnung 203 erreichen.

Die Drehachse, an der sich der Zeilenscanner befindet, verläuft in vertikaler Richtung, also parallel zur Flächennormalen des Behälterdeckels 106 (vgl. Fig. 1A). Der Zeilenscanner, der in einem Winkel 107, beispielsweise 45 Grad zum Behälterdeckel, an der drehbaren Achse 103 angebracht ist, kann durch mechanische Drehung und elektronische Strahlformung eine Zeile 108 der Füllgutoberfläche 101 vom Querschnitt des Behälters 109 abscannen (vgl. Fig. 1B). Der Behälter kann neben einem runden auch einen eckigen Querschnitt aufweisen oder jede beliebige andere Form.

Durch diese Winkelstellung wird ein Abtastschema nach Fig. 1B erreicht. Dieses Schema hat jedoch den Nachteil, dass die Abtastdichte vom Abstand zum Zentrum abhängt. Während im Zentrum die höchste Abtastdichte herrscht, nimmt die Dichte an abgetasteten Punkten zum Rand hin ab.

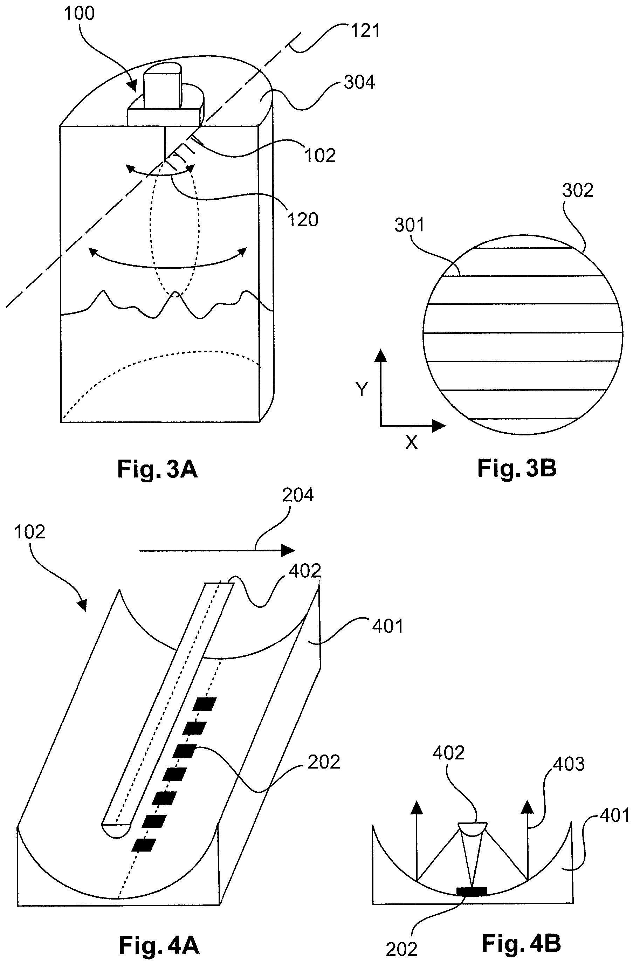

Fig. 3A zeigt eine Antenneneinrichtung 102, die so angeordnet ist, dass sie als Zeilenscanner eingesetzt werden kann. Die einzelnen Antennenelemente können dabei verschiedenste Formen annehmen. Beispielsweise kann die Antenneneinrichtung als Array aus Hornstrahlern, Patchantennen oder planaren Yagi-Antennen aufgebaut sein.

Alternativ oder zusätzlich zur vertikalen Drehachse 103, wie sie in Fig. 1A gezeigt ist, ist eine Drehachse 121 vorgesehen, die parallel zur Ebene der Antennenanordnung 102 angeordnet ist. Auf diese Weise kann ein anderes Scanmuster erreicht werden, beispielsweise das, das in der Fig. 3B gezeigt ist, oder eine Kombination der Scanmuster der Figuren 1B und 3B.

Durch die Kombination von mechanischer und elektronischer Strahlschwenkung kann eine kosten- und zeitoptimierte Erfassung einer Topologie erfolgen. Die ungleich verteilte Punktabtastung kann dadurch vermieden werden, dass eine drehbar gelagerte Achse 121 vorgesehen ist, die nicht parallel zur Flächennormalen des Behälterdeckels steht, sondern vorzugsweise senkrecht dazu (vgl. Fig. 3A) bzw., wie im Ausführungsbeispiel der Fig. 1A, schräg dazu. Beispielsweise verläuft diese Achse parallel zur Längserstreckung 203 der Arrayantenne (siehe Fig. 2).

Die Antennenzeile kann dabei durch eine im und gegen den Uhrzeigersinn drehende Bewegung ein Muster, wie in der Fig. 3B dargestellt, abscannen. Der mechanische Schwenk des Zeilenscanners wird in diesem Fall in y-Richtung ausgeführt und der elektronische Schwenk in x-Richtung. Die einzelnen Scanzeilen 301 haben somit keine Schnittpunkte mehr und ergeben ein Abtastmuster mit parallelen Zeilen im Querschnitt 302 des Behälters, was zu einer geringeren Abtastzeit zur Topologieerfassung führt.

Eine weitere Möglichkeit besteht darin, die Antenneneinrichtung 102 um die Achse 121 kontinuierlich drehen zu lassen. Ein Vorteil der konstanten und gleichmäßigen Drehung ist eine geringere mechanische Belastung der geschwenkten Bauelemente.

Fig. 4A und 4B zeigen ein weiteres Ausführungsbeispiel einer Antenneneinrichtung 102, deren Zeilenscanner aus einer Parabolrinne 401 als Hauptreflektor und einer Hyperbolschiene 402 als Gegenreflektor besteht. Die einzelnen Antennenelemente 202 sind beispielsweise durch Hornstrahler, Patchantennen oder Yagi-Antennen realisiert. Die Parabolrinne verbessert den Fokus der Antennencharakteristik in x-Richtung 204, was zu einer höheren örtlichen Auflösung der abgetasteten Topologie führen kann.

Das Sendesignal 403 wird hierbei von den Antennenelementen 202 in Richtung des Gegenreflektors 402 ausgesendet und dort reflektiert und danach nochmals an der Oberfläche der Parabolrinne 401 reflektiert.

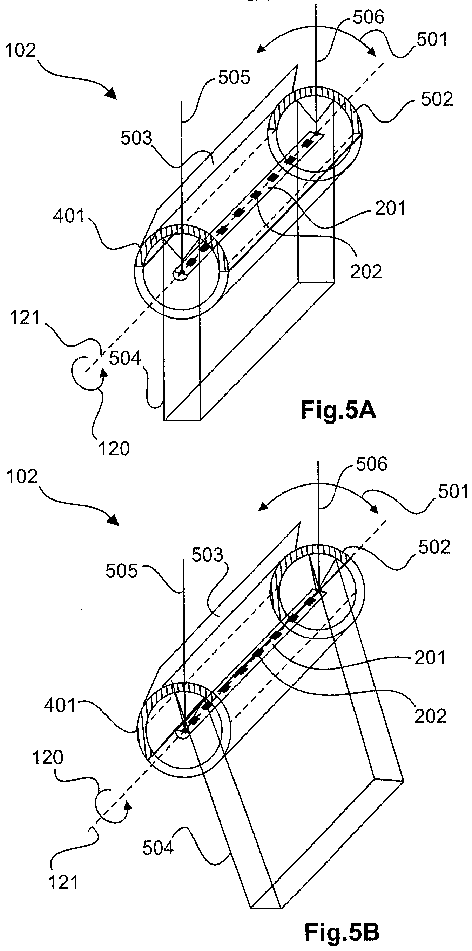

Die Parabolrinne 401 kann auch ohne Gegenreflektor 402 ausgelegt sein, wobei in diesem Fall die Speiseelemente 202 im Brennpunkt der Parabolrinne sitzen und die Parabolrinne um die Speiseelemente rotiert, wie dies in den Figuren 5A und 5B durch den Pfeil 501 dargestellt ist. In diesem Ausführungsbeispiel ist die Innenfläche im Bereich der schraffierte Fläche der Rinne 401 parabolisch geformt und metallisch beschichtet. Der Außenquerschnitt hingegen kann kreisrund sein. Vorteilhafterweise enthalten die geschwenkten Bauelemente keine elektrischen Komponenten, wodurch verschleißanfällige Schleifkontakte eingespart werden können.

Zum Schutz vor Staub und Anhaftungen kann ein Radom 502 in Form einer zylindrischen Walze verwendet werden, das die jeweiligen Antennenelemente umschließt und mit den mechanisch gedrehten Bauelementen verbunden ist. Es kann eine mechanische Vorrichtung 503 vorgesehen sein, beispielsweise in Form einer Platte oder Bürste, die dafür verwendet wird, Anhaftungen am Radom abzustreifen. Das Radom ist für die abgestrahlte und empfangene Hochfrequenzenergie 504 transparent.

Die Antenneneinrichtung 102 ist mittels zweier Aufhängungen 505, 506 am Gehäuse des Füllstandmessgeräts befestig. Die beiden Aufhängungen müssen nicht parallel sein.

Fig. 5B zeigt die Antenneneinrichtung der Fig. 5A, bei der die Parabolrinne um etwa 20 Grad gegen den Uhrzeigersinn gedreht ist.

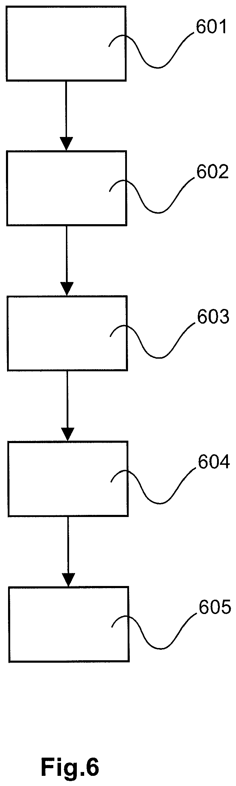

Fig. 6 zeigt ein Flussdiagramm eines Verfahrens gemäß einem Ausführungsbeispiel. In Schritt 601 erfolgt das Bereitstellen eines Füllstandmessgeräts, das an einem Behälter befestigt ist. In Schritt 602 erfolgt ein elektronisches und ein mechanisches Einstellen eines ersten Abstrahlwinkels einer Antenneneinrichtung des Füllstandmessgeräts, wonach in Schritt 603 eine Echokurve unter dem ersten Abstrahlwinkel erfasst wird. Danach erfolgt in Schritt 604 ein Drehen der Antenneneinrichtung um eine Achse, die parallel zu dem Array der Antenneneinrichtung angeordnet ist. In Schritt 605 erfolgt die Aufnahme einer weiteren Echokurve unter einem zweiten Abstrahlwinkel. Aus derartigen, unter verschiedenen Abstrahlwinkeln aufgenommenen Echokurven kann die Topologie der Füllgutoberfläche ermittelt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandmessgerät (100) zum Bestimmen einer Topologie einer Füllgutoberfläche (101), aufweisend:
eine Antenneneinrichtung (102) mit einem Array von Strahlerelementen (202) zum Senden und/oder Empfangen von elektromagnetischen Signalen, wobei das Array ein eindimensionales Array ist, das sich in einer Längsrichtung (203) erstreckt;
eine drehbare Lagerung zum Drehen der Antenneneinrichtung (102) um eine nicht-vertikale Achse (121), die parallel zu der Längsrichtung angeordnet ist;
wobei mehrere Abstrahl- und/oder Empfangswinkel der Antenneneinrichtung (102) relativ zur Füllgutoberfläche (101) durch Drehung der Antenneneinrichtung um die nicht-vertikale Achse in Kombination mit der elektronischen Strahlsteuerung elektronisch und mechanisch einstellbar sind, um die Füllgutoberfläche zeilenweise abzutasten und die Topologie der Füllgutoberfläche zu ermitteln.

2. Füllstandmessgerät (100) gemäß Anspruch 1,
eingerichtet zum elektronischen Einstellen der Abstrahl- und/oder Empfangswinkel unter Verwendung digitaler Strahlformungsverfahren.

3. Füllstandmessgerät (100) nach einem der vorherigen Ansprüche,
eingerichtet zum elektronischen Einstellen mehrerer Abstrahl- und/oder Empfangswinkel unter Verwendung analoger Phasenschieber und/oder analoger Schalter.

4. Füllstandmessgerät (100) nach einem der vorherigen Ansprüche, weiter aufweisend:
eine weitere drehbare Lagerung zum Drehen der Antenneneinrichtung (102) um eine Achse (103), die nicht parallel zu dem Array angeordnet ist.

5. Füllstandmessgerät (100) nach Anspruch 4,
wobei die weitere Achse (103) eine vertikale Achse ist.

6. Füllstandmessgerät (100) nach einem der vorherigen Ansprüche,
wobei die Antenneneinrichtung (102) schräg relativ zu einer horizontalen Richtung (122) angeordnet ist, sodass ein Winkel (107) zwischen der Längsrichtung (203) der Antenneneinrichtung (102) und der horizontalen Richtung (122) ungleich 0° beträgt.

7. Füllstandmessgerät (100) gemäß einem der vorhergehenden Ansprüche, weiter aufweisend:
eine Energieversorgungs- und Kommunikationsschnittstelle zum Anschluss des Füllstandmessgeräts an eine Zweidrahtleitung, über welche das Füllstandmessgerät mit der für den Messbetrieb notwendigen Energie versorgt werden kann und über welche Messdaten an eine entfernte Steuereinheit übertragen werden können.

8. Verwendung eines Füllstandmessgerätes (100) gemäß einem der Ansprüche 1 bis 7 zur Bestimmung einer Viskosität einer bewegten Flüssigkeit.

9. Verwendung eines Füllstandmessgerätes (100) gemäß einem der Ansprüche 1 bis 7 zur Bestimmung der Masse oder des Volumens eines Mediums.

## Claims

1. A level measuring device (100) for determining a topology of a product surface (101), comprising:
an antenna device (102) having an array of radiator elements (202) for transmitting and/or receiving electromagnetic signals, the array being a one-dimensional array extending in a longitudinal direction (203);
a rotatable support for rotating the antenna means (102) about a non-vertical axis (121) arranged parallel to the longitudinal direction wherein a plurality of radiation and/or reception angles of the antenna means (102) relative to the product surface (101) are electronically and mechanically adjustable by rotation of the antenna means about the non-vertical axis in combination with the electronic beam control to scan the product surface line by line and to determine the topology of the product surface.

2. Level measuring device (100) according to claim 1,
configured to electronically adjust the beam and/or receive angles using digital beamforming techniques.

3. Level measuring device (100) according to any of the previous claims,
configured to electronically adjust a plurality of beam and/or receive angles using analogue phase shifters and/or analogue switches.

4. Level measuring device (100) according to any one of the preceding claims, further comprising:
a further rotatable mounting for rotating the antenna device (102) about an axis (103) which is not parallel to the array.

5. Level measuring device (100) according to claim 4,
wherein the further axis (103) is a vertical axis.

6. Level measuring device (100) according to any one of the previous claims,
wherein the antenna means (102) is arranged obliquely relative to a horizontal direction (122) such that an angle (107) between the longitudinal direction (203) of the antenna means (102) and the horizontal direction (122) is not 0°.

7. Level measuring device (100) according to any one of the preceding claims, further comprising:
A power supply and communication interface for connecting the level measuring device to a two-wire line, via which the level measuring device can be supplied with the energy necessary for the measuring operation and via which measurement data can be transmitted to a remote control unit.

8. Use of a level measuring device (100) according to any one of claims 1 to 7 for determining a viscosity of a moving fluid.

9. Use of a level measuring device (100) according to any one of claims 1 to 7 for determining the mass or volume of a medium.

## Revendications

1. Appareil de mesure de niveau de remplissage (100) destiné à déterminer une topologie d'une surface de matériau de remplissage (101), comportant :
un dispositif à antenne (102) ayant un réseau d'éléments rayonnants (202) pour envoyer et/ou recevoir des signaux électromagnétiques, dans lequel le réseau est un réseau unidimensionnel qui s'étend dans une direction longitudinale (203) ;
un support rotatif pour faire tourner le dispositif à antenne (102) autour d'un axe non vertical (121) qui est agencé parallèlement à la direction longitudinale ;
dans lequel plusieurs angles d'émission et/ou de réception du dispositif à antenne (102) par rapport à la surface de matériau de remplissage (101) peuvent être réglés électroniquement et mécaniquement par une rotation du dispositif à antenne autour de l'axe non vertical en combinaison avec la commande de faisceau électronique, afin de balayer ligne par ligne la surface de matériau de remplissage et de déterminer la topologie de la surface de matériau de remplissage.

2. Appareil de mesure de niveau de remplissage (100) selon la revendication 1,
configuré pour régler électroniquement les angles d'émission et/ou de réception en utilisant un procédé de conformation de faisceau numérique.

3. Appareil de mesure de niveau de remplissage (100) selon l'une des revendications précédentes,
configuré pour régler électroniquement plusieurs angles d'émission et/ou de réception en utilisant des déphaseurs analogiques et/ou des commutateurs analogiques.

4. Appareil de mesure de niveau de remplissage (100) selon l'une des revendications précédentes, comportant en outre : un support rotatif supplémentaire pour faire tourner le dispositif à antenne (102) autour d'un axe (103) qui n'est pas agencé parallèlement au réseau.

5. Appareil de mesure de niveau de remplissage (100) selon la revendication 4,
dans lequel l'axe supplémentaire (103) est un axe vertical.

6. Appareil de mesure de niveau de remplissage (100) selon l'une des revendications précédentes,
dans lequel le dispositif à antenne (102) est agencé incliné par rapport à une direction horizontale (122), de sorte qu'un angle (107) entre la direction longitudinale (203) du dispositif à antenne (102) et la direction horizontale (122) n'est pas égal à 0°.

7. Appareil de mesure de niveau de remplissage (100) selon l'une des revendications précédentes, comportant en outre : une interface d'alimentation en énergie et de communication pour raccorder l'appareil de mesure de niveau de remplissage à une ligne à deux fils, par l'intermédiaire de laquelle l'appareil de mesure de niveau de remplissage peut être alimenté en énergie nécessaire à la réalisation de la mesure et par l'intermédiaire de laquelle des données de mesure peuvent être transmises à une unité de commande distante.

8. Utilisation d'un appareil de mesure de niveau de remplissage (100) selon l'une des revendications 1 à 7 pour déterminer une viscosité d'un liquide en mouvement.

9. Utilisation d'un appareil de mesure de niveau de remplissage (100) selon l'une des revendications 1 à 7 pour déterminer la masse ou le volume d'un milieu.
